(19) Europäisches Patentamt / European Patent Office / Office européen des brevets

(11) **EP 4 645 347 A1**

(12) **EUROPEAN PATENT APPLICATION**
published in accordance with Art. 153(4) EPC

(43) Date of publication:
05.11.2025 Bulletin 2025/45

(21) Application number: 23912045.4

(22) Date of filing: 25.12.2023

(51) International Patent Classification (IPC):
*H01B 13/00* (2006.01)     *C01B 25/14* (2006.01)
*H01M 10/0562* (2010.01)

(52) Cooperative Patent Classification (CPC):
**C01B 25/14; H01B 13/00; H01M 10/0562;**
Y02E 60/10

(86) International application number:
**PCT/JP2023/046402**

(87) International publication number:
**WO 2024/143265 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.12.2022  JP 2022212573

(71) Applicant: **AGC INC.**
**Chiyoda-ku,**
**Tokyo 1008405 (JP)**

(72) Inventor: **ANDO, Ryota**
**Tokyo 100-8405 (JP)**

(74) Representative: **Müller-Boré & Partner**
**Patentanwälte PartG mbB**
**Friedenheimer Brücke 21**
**80639 München (DE)**

(54) **METHOD FOR PRODUCING SULFIDE SOLID ELECTROLYTE COMPLEX, SULFIDE SOLID ELECTROLYTE COMPLEX, AND METHOD FOR PRODUCING COMPLEX POWDER**

(57)     Provided is a method for producing a sulfide solid electrolyte complex, comprising: adding microparticles having a BET specific surface area of 5 m$^2$/g or greater to a solution containing at least one type of sulfide solid electrolyte raw material, and dispersing the microparticles in the solution, to obtain a microparticle dispersion liquid; removing a solvent from the microparticle dispersion liquid to obtain a complex powder of the microparticles and the sulfide solid electrolyte raw material; and obtaining a sulfide solid electrolyte complex using the complex powder.

*FIG. 1*

START

ADD FINE PARTICLES HAVING BET OF 5 m$^2$/g OR MORE TO SOLUTION CONTAINING AT LEAST ONE SULFIDE SOLID ELECTROLYTE RAW MATERIAL AND DISPERSE FINE PARTICLES TO OBTAIN FINE PARTICLE DISPERSION LIQUID — S1

REMOVE SOLVENT OF FINE PARTICLE DISPERSION LIQUID TO OBTAIN COMPOSITE POWDER OF FINE PARTICLES AND SULFIDE SOLID ELECTROLYTE RAW MATERIAL — S2

OBTAIN SULFIDE SOLID ELECTROLYTE COMPOSITE USING COMPOSITE POWDER — S3

END

**Description**

TECHNICAL FIELD

The present invention relates to a method for producing a sulfide solid electrolyte composite, the sulfide solid electrolyte composite, and a method for producing a composite powder.

BACKGROUND ART

Lithium-ion secondary batteries are widely used in portable electronic devices such as mobile phones and laptop computers. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of the solid electrolyte used in the all-solid-state lithium-ion secondary battery include a sulfide solid electrolyte. In the related art, in producing a sulfide solid electrolyte, it is known to mix aluminum oxide, a nitride, or the like with a sulfide solid electrolyte raw material to produce the sulfide solid electrolyte in order to increase lithium ion conductivity. For example, Patent Literature 1 below discloses a solid electrolyte containing aluminum oxide and having lithium ion conductivity. Non Patent Literature 1 below discloses a method for producing a solid electrolyte using $Li_{1.5}Al_{0.5}N$ (LAN) as a nitride.

CITATION LIST

PATENT LITERATURE

Patent Literature 1: WO2020/105604

NON-PATENT LITERATURE

Non Patent Literature 1: H. Yamane et al., "Lithium aluminum nitride, Li3AlN2 as a lithium solid electrolyte", Solid State Ionics Volume 15, Issue 1, February 1985, Pages 51-54

SUMMARY OF INVENTION

TECHNICAL PROBLEM

However, aluminum oxide and the nitride have poor reactivity with other sulfide solid electrolyte raw materials, and there is a problem that it takes a long time to synthesize the sulfide solid electrolyte. Therefore, the present inventors have conducted intensive studies on a component having good reactivity with a sulfide solid electrolyte raw material and capable of improving lithium ion conductivity, and have found that fine particles having a small particle diameter are used. However, since the fine particles are light in weight and are easily scattered, when the fine particles are charged into and mixed in a container of a mixing apparatus or when a raw material is conveyed by an air flow, the fine particles fly by the air flow or adhere to a container wall surface or the like due to static electricity, thereby causing a problem that components in the obtained sulfide solid electrolyte composite are deviated. Therefore, when the fine particles are used, moisture control is required, but the sulfide solid electrolyte raw material is required to be handled in an environment where moisture control is not possible, making it difficult to use the fine particles as the sulfide solid electrolyte raw material.

Therefore, an object of the present invention is to provide a method for producing a sulfide solid electrolyte composite having excellent handleability during production and a small deviation of fine particles, and the sulfide solid electrolyte composite.

SOLUTION TO PROBLEM

As a result of further intensive studies, the present inventors have first found that, according to a method in which fine particles having a predetermined BET specific surface area are added to a solution containing at least one sulfide solid electrolyte raw material to obtain a dispersion liquid of the fine particles, and then a composite powder obtained by removing a solvent to produce a sulfide solid electrolyte composite, a sulfide solid electrolyte composite having excellent handleability during the production and a small deviation of the fine particles can be obtained, and have completed the present invention.

That is, the present invention relates to the following [1] to [16].

[1] A method for producing a sulfide solid electrolyte composite, the method including:

adding fine particles having a BET specific surface area of 5 $m^2$/g or more to a solution containing at least one sulfide solid electrolyte raw material and dispersing the fine particles to obtain a fine particle dispersion liquid; removing a solvent of the fine particle dispersion liquid to obtain a composite powder of the fine particles and the sulfide solid electrolyte raw material; and
obtaining the sulfide solid electrolyte composite using the composite powder.

[2] The method for producing a sulfide solid electrolyte composite according to [1], in which the sulfide solid electrolyte composite is obtained by a solid phase method using the composite powder.

[3] The method for producing a sulfide solid electrolyte composite according to [1], in which the sulfide solid electrolyte composite is obtained by a melting method using the composite powder.

[4] The method for producing a sulfide solid electrolyte composite according to [1], in which the fine particles are an oxide.

[5] The method for producing a sulfide solid electrolyte composite according to [4], in which the oxide is at least one oxide of $SiO_2$, $Al_2O_3$, and $TiO_2$.

[6] The method for producing a sulfide solid electrolyte composite according to [1], in which the fine particles are a nitride.

[7] The method for producing a sulfide solid electrolyte composite according to [6], in which the nitride is at least one nitride of AIN, $Si_3N_4$, and BN.

[8] The method for producing a sulfide solid electrolyte composite according to [1], in which the sulfide solid electrolyte raw material is a lithium halide.

[9] The method for producing a sulfide solid electrolyte composite according to [8], in which the lithium halide is lithium bromide.

[10] The method for producing a sulfide solid electrolyte composite according to [1], in which the sulfide solid electrolyte raw material is lithium hydroxide.

[11] The method for producing a sulfide solid electrolyte composite according to [1], in which the solvent is removed after adding an alkali metal sulfide to the fine particle dispersion liquid.

[12] The method for producing a sulfide solid electrolyte composite according to [11], in which the alkali metal sulfide is lithium sulfide.

[13] The method for producing a sulfide solid electrolyte composite according to [1], in which the solvent is removed after introducing hydrogen sulfide into the fine particle dispersion liquid.

[14] The method for producing a sulfide solid electrolyte composite according to [1], in which the sulfide solid electrolyte composite is obtained using the composite powder which has been reacted with hydrogen sulfide.

[15] A sulfide solid electrolyte composite including fine particles having a BET specific surface area of 5 $m^2$/g or more, in which a variation of the fine particles in the sulfide solid electrolyte composite is 15% or less.

[16] A method for producing a composite powder, the method including:

adding fine particles having a BET specific surface area of 5 $m^2$/g or more to a solution containing at least one sulfide solid electrolyte raw material and dispersing the fine particles to obtain a fine particle dispersion liquid; and removing a solvent of the fine particle dispersion liquid to obtain the composite powder of the fine particles and the sulfide solid electrolyte raw material.

ADVANTAGEOUS EFFECTS OF INVENTION

According to a production method of the present invention, it is possible to obtain a sulfide solid electrolyte composite having excellent handleability during production and a small deviation of fine particles.

BRIEF DESCRIPTION OF DRAWINGS

FIG. 1 shows a flow chart of a method for producing a sulfide solid electrolyte composite according to one embodiment of the present invention.
FIG. 2 shows an example of a flow chart for producing the sulfide solid electrolyte composite by a solid phase method using a composite powder in the method for producing a sulfide solid electrolyte composite according to the embodiment of the present invention.

FIG. 3 shows an example of a flow chart for producing the sulfide solid electrolyte composite by a melting method using the composite powder in the method for producing a sulfide solid electrolyte composite according to the embodiment of the present invention.

DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value.

<<Method for Producing Sulfide Solid Electrolyte Composite>>

A method for producing a sulfide solid electrolyte composite according to one embodiment of the present invention (hereinafter, also referred to as the present production method) includes: adding fine particles having a BET specific surface area of 5 $m^2$/g or more to a solution containing at least one sulfide solid electrolyte raw material and dispersing the fine particles to obtain a fine particle dispersion liquid; removing a solvent of the fine particle dispersion liquid to obtain a composite powder of the fine particles and the sulfide solid electrolyte raw material; and obtaining the sulfide solid electrolyte composite using the composite powder.

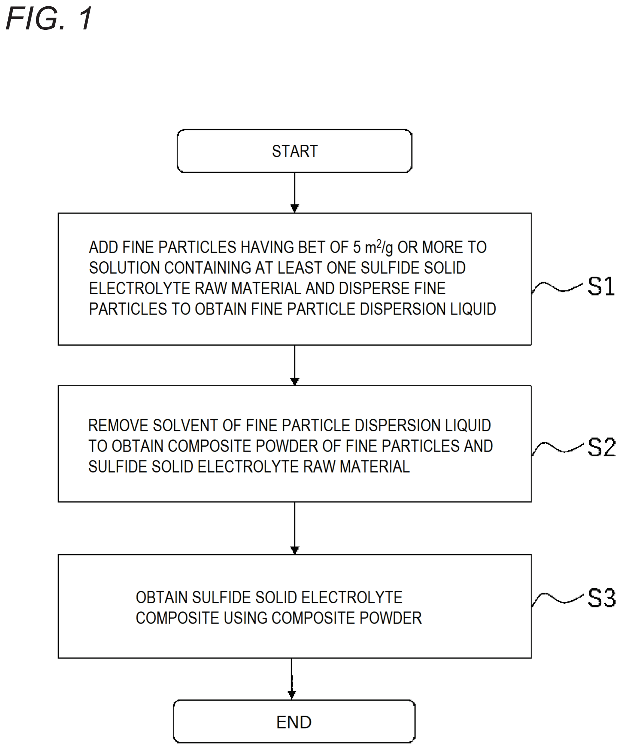

FIG. 1 shows an example of a flow chart of the present production method. In the present production method, first, the fine particles having a BET specific surface area of 5 $m^2$/g or more are added to the solution containing at least one sulfide solid electrolyte raw material, and the fine particles are dispersed to obtain the fine particle dispersion liquid (step S1). Subsequently, the solvent of the obtained fine particle dispersion liquid is removed to obtain the composite powder of the fine particles and the sulfide solid electrolyte raw material (step S2). The sulfide solid electrolyte composite is obtained using the obtained composite powder (step S3).

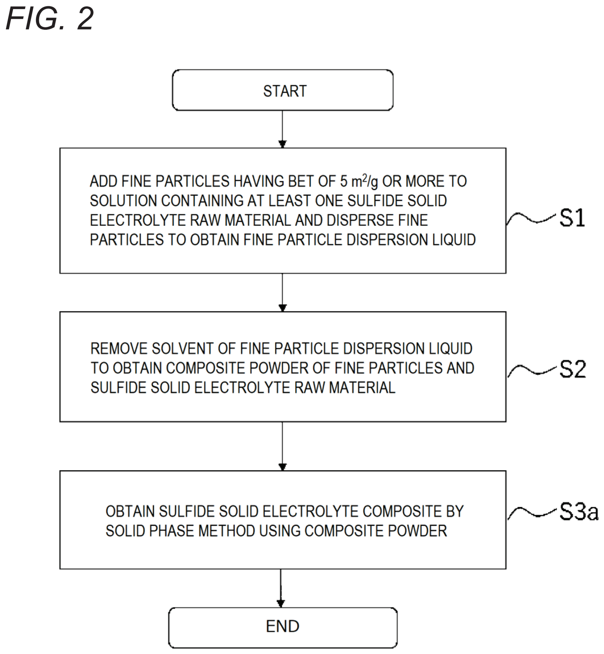

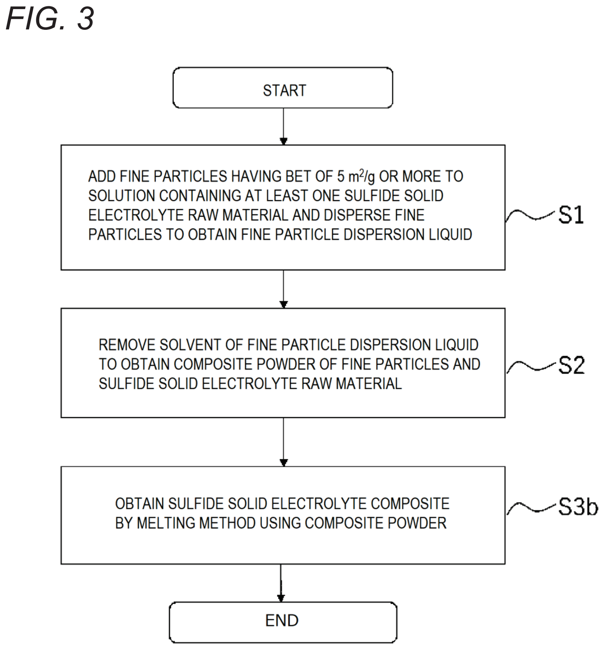

FIG. 2 shows an example of a flow chart for producing the sulfide solid electrolyte composite by a solid phase method using the composite powder. FIG. 3 shows an example of a flow chart for producing the sulfide solid electrolyte composite by a melting method using the composite powder.

In the solid phase method, as shown in FIG. 2, step S3 in FIG. 1 is replaced with step S3a, which is a step of obtaining the sulfide solid electrolyte composite by the solid phase method using the composite powder (step S3a).

On the other hand, in the melting method, as shown in FIG. 3, step S3 in FIG. 1 is replaced with step S3b, which is a step of obtaining the sulfide solid electrolyte composite by the melting method using the composite powder (step S3b).

It is preferable that steps S1 to S3 are performed continuously, and when this continuous production method is adopted, the effect of the present invention is further enhanced.

The sulfide solid electrolyte composite obtained by the present production method is a composite of a sulfide solid electrolyte and the fine particles having a BET specific surface area of 5 $m^2$/g or more (hereinafter, also simply referred to as fine particles), and the fine particles are present in a dispersed state in the sulfide solid electrolyte. In other words, the fine particles are present with high homogeneity in the sulfide solid electrolyte. Examples of such fine particles include silicon oxide ($SiO_2$) and the like, as described below, and have an effect of increasing lithium ion conductivity of the sulfide solid electrolyte. Since the fine particles are present with high homogeneity in the sulfide solid electrolyte, it is possible to prevent deterioration of battery performance which is caused by a deviation of components.

"The fine particles in a dispersed state in the sulfide solid electrolyte" includes a state in which the fine particles are incorporated into a skeleton structure and are homogeneously solid-solved, a state in which the fine particles are not incorporated into a skeleton structure of the sulfide solid electrolyte and are dispersed as fine particles or components derived from the fine particles, and the like.

Hereinafter, each step in the present production method will be described in detail.

<Preparation of Fine Particle Dispersion Liquid>

In the present production method, first, the fine particles having a BET specific surface area of 5 $m^2$/g or more are added to the solution containing at least one sulfide solid electrolyte raw material, and the fine particles are dispersed to obtain the fine particle dispersion liquid (step S1).

(Fine Particles)

Examples of the fine particles having a BET specific surface area of 5 $m^2$/g or more used in the present production method include oxides, nitrides, carbides, and borides having a BET specific surface area of 5 $m^2$/g or more. Among these, oxides and nitrides are preferable from the viewpoint of improving electrical conductivity.

Examples of the oxide include silicon oxide ($SiO_2$), aluminum oxide ($Al_2O_3$), titanium oxide ($TiO_2$), and zirconia oxide ($ZrO_2$).

Examples of the nitride include aluminum nitride (AlN), silicon nitride ($Si_3N_4$), boron nitride (BN), aluminum carbonitride, chromium nitride, and magnesium nitride.

Examples of the carbide include boron carbide, aluminum carbide, chromium carbide, hafnium carbide, molybdenum carbide, niobium carbide, and silicon carbide.

Other examples include lanthanum hexaboride, lanthanum boride, lanthanum trifluoride, molybdenum disulfide, and molybdenum silicide.

These may be used alone or in combination of two or more kinds thereof.

Among these, oxides and nitrides are preferable from the viewpoint of improving electric conductivity.

The BET specific surface area of the fine particles is $5\,m^2/g$ or more. When the BET specific surface area is $5\,m^2/g$ or more, reactivity with other sulfide solid electrolyte raw materials is improved, and a synthesis time of the sulfide solid electrolyte can be shortened. The BET specific surface area of the fine particles is more preferably $5\,m^2/g$ to $500\,m^2/g$. The BET specific surface area of the fine particles is more preferably $10\,m^2/g$ or more, and particularly preferably $20\,m^2/g$ or more, and is more preferably $300\,m^2/g$ or less, and particularly preferably $200\,m^2/g$ or less.

The BET specific surface area means a nitrogen adsorption specific surface area measured by a BET method. The BET specific surface area is measured by a multi-point method using liquid nitrogen after drying to 50 mTorr at 230°C as a pre-treatment using, for example, a specific surface area measuring apparatus "TriStar II3020" manufactured by SHIMADZU CORPORATION.

A primary particle diameter of the fine particles is preferably, for example, 5 nm to 3000 nm from the viewpoints of improving the reactivity with the other sulfide solid electrolyte raw materials, shortening the synthesis time of the sulfide solid electrolyte, and dispersing in a solution to be described later. The primary particle diameter of the fine particles is more preferably 5 nm or more, and particularly preferably 10 nm or more, and is more preferably 2000 nm or less, and particularly preferably 1000 nm or less.

Here, the primary particle diameter of the fine particles is measured by observation using a SEM. In the case of aggregation, the fine particles refers to particles that constitute an aggregate. The primary particle diameter is an average value of average particle diameters of 20 particles which are randomly selected.

An average particle diameter of the fine particles is preferably, for example, 5 nm to 3000 nm from the viewpoints of improving the reactivity with the other sulfide solid electrolyte raw materials, shortening the synthesis time of the sulfide solid electrolyte, and dispersing in a solution to be described later. The average particle diameter of the fine particles is more preferably 5 nm or more, and particularly preferably 10 nm or more, and is more preferably 2000 nm or less, and particularly preferably 1000 nm or less.

Here, the average particle diameter refers to a median diameter (D50) determined from a volume-based particle size distribution chart obtained by measuring a particle size distribution using a particle size distribution meter using a laser diffraction method, which means a particle diameter at which 50 vol% of particles has a particle diameter equal to or less than the value.

An amount of fine particles to be added to the solution to be described below is preferably 0.1% by mass to 30% by mass relative to the solution. When the amount of the fine particles is 0.1% by mass or more, the effect of improving performance of the electrolyte can be expected, and when the amount is 30% by mass or less, the fine particles can be kept in a good dispersed state when added. The amount of the fine particles is more preferably 0.5% by mass or more, and still more preferably 1.0% by mass or more, and is more preferably 20% by mass or less, and still more preferably 10% by mass or less.

(Sulfide Solid Electrolyte Raw Material)

The solution to which the fine particles are added contains at least one sulfide solid electrolyte raw material. The solution may or may not contain all of the sulfide solid electrolyte raw materials constituting the sulfide solid electrolyte composite finally obtained by the present production method. In the former case, when the sulfide solid electrolyte composite is obtained by the solid phase method, the melting method, or the like using the composite powder in step S3 to be described later, it is not necessary to separately add the sulfide solid electrolyte raw material. In contrast, in the latter case, when the sulfide solid electrolyte composite is obtained by the solid phase method, the melting method, or the like using the composite powder, a sulfide solid electrolyte raw material that is not contained in the above solution is separately added.

The at least one sulfide solid electrolyte raw material contained in the solution preferably has a property of being soluble in the solution.

As the sulfide solid electrolyte raw material, a commercially available sulfide solid electrolyte raw material may be used, or a sulfide solid electrolyte raw material produced from a material may be used. These sulfide solid electrolyte raw materials may be further subjected to a known pre-treatment. That is, the present production method may appropriately include a step of producing the sulfide solid electrolyte raw material and a step of performing a pre-treatment on the sulfide solid electrolyte raw material.

The sulfide solid electrolyte raw material is specifically described below. The sulfide solid electrolyte raw material usually contains an alkali metal element (R) and a sulfur element (S).

Examples of the alkali metal element (R) include lithium element (Li), sodium element (Na), and potassium element (K), and among these elements, the lithium element (Li) is preferable. As the alkali metal element (R), substances (components) containing an alkali metal element such as elemental alkali metal element and compounds containing an alkali metal element can be appropriately combined and used. Here, as the lithium element, Li-containing substances (components), such as elemental Li and Li-containing compounds, can be appropriately combined and used.

Examples of a substance containing the lithium element (Li) include lithium compounds such as lithium sulfide ($Li_2S$), lithium iodide (LiI), lithium carbonate ($Li_2CO_3$), lithium sulfate ($Li_2SO_4$), lithium oxide ($Li_2O$), and lithium hydroxide (LiOH), and metallic lithium. As the substance containing the lithium element (Li), from the viewpoint of obtaining a sulfide material, it is preferable to use lithium sulfide.

As the sulfur element (S), S-containing substances (components), such as elemental S and S-containing compounds, can be appropriately combined and used.

Examples of a substance containing the sulfur element (S) include phosphorus sulfides such as phosphorus trisulfide ($P_2S_3$) and phosphorus pentasulfide ($P_2S_5$), other sulfur compounds containing phosphorus, elemental sulfur, and a compound containing sulfur. Examples of the compound containing sulfur include $H_2S$, $CS_2$, iron sulfides (such as FeS, $Fe_2S_3$, $FeS_2$, $Fe_{1-x}S$), bismuth sulfide ($Bi_2S_3$), and copper sulfides (such as CuS, $Cu_2S$, $Cu_{1-x}S$). From the viewpoint of obtaining a sulfide material, the substance containing the sulfur element (S) is preferably phosphorus sulfide, and more preferably phosphorus pentasulfide ($P_2S_5$). These may be used alone or in combination of two or more kinds thereof. Phosphorus sulfide can be considered as a compound that serves as both the S-containing substance and a P-containing substance, which is described later.

From the viewpoint of improving ionic conductivity and the like of the obtained sulfide solid electrolyte, it is preferable that the sulfide solid electrolyte raw material further contains a phosphorus element (P). As the phosphorus element (P), P-containing substances (components), such as elemental P and P-containing compounds, can be appropriately combined and used.

Examples of a substance containing the phosphorus element (P) include phosphorus sulfides such as phosphorus trisulfide ($P_2S_3$) and phosphorus pentasulfide ($P_2S_5$), phosphorus compounds such as sodium phosphate ($Na_3PO_4$), and elemental phosphorus. As the substance containing the phosphorus element (P), from the viewpoint of exerting the effect of the present invention more effectively, phosphorus sulfide having high volatility is preferable, and phosphorus pentasulfide ($P_2S_5$) is more preferable. These may be used alone or in combination of two or more kinds thereof.

The sulfide solid electrolyte raw material may be obtained as a mixed raw material by, for example, appropriately mixing the above-mentioned substances according to a composition of a target sulfide solid electrolyte. A mixing ratio is not particularly limited, but for example, a molar ratio S/R of the sulfur element (S) to the alkali metal element (R) in the sulfide solid electrolyte raw material is preferably 0.65/0.35 or less, and more preferably 0.5/0.5 or less, from the viewpoint of improving the ionic conductivity and the like of the obtained sulfide solid electrolyte. The mixed raw material is preferably obtained by mixing the raw materials in a predetermined stoichiometric mixture ratio according to the materials used for the mixing. Examples of a mixing method include mixing in a mortar, mixing using a medium such as a planetary ball mill, and medium-less mixing such as a pin mill, a powder stirrer, and air flow mixing.

Examples of a preferred combination of the alkali metal element and the sulfur element contained in the sulfide solid electrolyte raw material include a combination of $Li_2S$ and $P_2S_5$. When $Li_2S$ and $P_2S_5$ are combined, a molar ratio Li/P of Li to P is preferably 40/60 or more, and more preferably 50/50 or more. The molar ratio Li/P of Li to P, is preferably 88/12 or less. The molar ratio Li/P of Li to P is preferably from 40/60 to 88/12, and more preferably from 50/50 to 88/12. By adjusting the mixing ratio so that an amount of $P_2S_5$ is relatively smaller than $Li_2S$, it becomes easier to prevent volatilization of sulfur and phosphorus components during the heat treatment due to a smaller boiling point of $P_2S_5$ compared to a melting point of $Li_2S$.

On the other hand, since lithium sulfide is expensive, a lithium compound other than lithium sulfide, metallic lithium, or the like may be used from the viewpoint of reducing a production cost of the sulfide solid electrolyte. Specifically, in this case, the sulfide solid electrolyte raw material preferably contains one or more selected from the group consisting of metallic lithium, lithium iodide (LiI), lithium carbonate ($Li_2CO_3$), lithium sulfate ($Li_2SO_4$), lithium oxide ($Li_2O$), and lithium hydroxide (LiOH) as the Li-containing substance. These may be used alone or in combination of two or more kinds thereof.

The sulfide solid electrolyte raw material may contain further substances (compounds and the like) in addition to the above substances depending on the composition of the target sulfide solid electrolyte or as additives or the like.

For example, when producing a sulfide solid electrolyte containing a halogen element such as F, Cl, Br or I, the sulfide solid electrolyte raw material preferably contains a halogen element (Ha). In this case, the sulfide solid electrolyte raw material preferably contains a compound containing a halogen element. Examples of the compound containing a halogen element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. As the compound containing a halogen element, lithium halides are preferable, and LiCl, LiBr, and LiI are more preferable, from the viewpoint of reactivity of the raw material. These may be used alone or in combination of two or more kinds thereof.

An alkali metal halide such as lithium halides is also a compound containing an alkali metal element such as Li. When the sulfide solid electrolyte raw material contains an alkali metal halide, a part or all of the alkali metal element such as Li in the sulfide solid electrolyte raw material may be derived from the alkali metal halide such as lithium halides.

When the sulfide solid electrolyte raw material contains the halogen element (Ha) and the phosphorus element (P), a molar equivalent of Ha relative to P in the sulfide solid electrolyte raw material is preferably 0.2 molar equivalents or more, and more preferably 0.5 molar equivalents or more, from the viewpoint of improving the ionic conductivity and the like of the obtained sulfide solid electrolyte. The molar equivalent of Ha is preferably 4 molar equivalents or less, and more preferably 3 molar equivalents or less, from the viewpoint of stability of the obtained sulfide solid electrolyte.

The obtained sulfide solid electrolyte may be an amorphous sulfide solid electrolyte depending on a purpose, and from the viewpoint of improving ease of generation of an amorphous phase, it is also preferable that the sulfide solid electrolyte raw material contains sulfides such as $SiS_2$, $B_2S_3$, $GeS_2$, and $Al_2S_3$. By facilitating the generation of the amorphous phase, when the amorphous substance is obtained by rapid cooling, the amorphous sulfide solid electrolyte can be obtained even when a cooling rate is reduced, thereby reducing a load on an apparatus.

From the viewpoint of imparting moisture resistance to the sulfide solid electrolyte, it is also preferable that oxides such as $SiO_2$, $B_2O_3$, $GeO_2$, $Al_2O_3$, $P_2O_5$ are contained. These may be used alone or in combination of two or more kinds thereof.

Among the sulfide solid electrolyte raw materials described above, as the sulfide solid electrolyte raw material contained in the solution, a lithium halide, lithium hydroxide, lithium sulfate, and the like are preferable from the viewpoint of ease of handling as a solvent and high solubility in water. The lithium halide is preferably lithium bromide.

An average particle diameter of the sulfide solid electrolyte raw material contained in the solution is preferably, for example, 100 $\mu$m to 1000 $\mu$m from the viewpoint of ease of handling as a powder. Here, the average particle diameter refers to a median diameter (D50) determined from a volume-based particle size distribution chart obtained by measuring a particle size distribution using a particle size distribution meter using a laser diffraction method, which means a particle diameter at which 50 vol% of particles has a particle diameter equal to or less than the value.

An amount of the sulfide solid electrolyte raw material contained in the solution is preferably 10% by mass to 40% by mass with respect to the solution. When the amount of the sulfide solid electrolyte raw material is 10% by mass or more, it is advantageous in that a cost of removing the solvent is reduced in the later step of removing the solvent, and when the amount is 40% by mass or less, an undissolved residue of the sulfide solid electrolyte raw material can be reduced. The amount of the sulfide solid electrolyte raw material is more preferably 15% by mass or more, and still more preferably 20% by mass or more, and more preferably 35% by mass or less, and still more preferably 30% by mass or less.

The solution may contain any component in addition to the sulfide solid electrolyte raw material, and examples thereof include a solvent and a dispersant.

Examples of the solvent include water and ethanol. The solvent is preferably water, and in this case, the solution means an aqueous solution.

Examples of the dispersant include sodium polyacrylate, a sulfonic acid copolymer, and a carboxylic acid copolymer.

(Fine Particle Dispersion Liquid)

A method for dispersing the fine particles in the solution is not particularly limited, and examples thereof include stirring, pulverization, and addition of a dispersant.

As a stirring method, a known method in the related art can be used, and an emulsification apparatus such as a homogenizer, homomixer, colloid mill, ultrasonic emulsifier, and homodisperser can be used.

As a pulverization method, a known method in the related art can be used, and for example, a wet-type jet mill apparatus can be used.

As a method of adding a dispersant, a known method in the related art can be used, and as the dispersant, for example, sodium polyacrylate, a sulfonic acid copolymer, a carboxylic acid copolymer, or the like can be used.

When it is desired to precipitate the fine particles not in the sulfide solid electrolyte raw material dissolved in the dispersion liquid itself but in a raw material obtained by sulfurizing the sulfide solid electrolyte raw material dissolved in the dispersion liquid, a step of sulfurizing the fine particle dispersion liquid may be performed before proceeding to step S2 of removing the solvent. Accordingly, the fine particles can be dispersed in the sulfurized sulfide solid electrolyte raw material.

A sulfurization method is not particularly limited, and examples thereof include a method for introducing hydrogen sulfide into the fine particle dispersion liquid.

In the method for introducing hydrogen sulfide into the fine particle dispersion liquid, hydrogen sulfide may be introduced as a gas into the fine particle dispersion liquid.

As a condition for introducing hydrogen sulfide as the gas into the fine particle dispersion liquid, a nozzle is inserted into the fine particle dispersion liquid, and bubbling is usually performed at a temperature range of 5°C to 95°C for 60 minutes to 360 minutes. A temperature during the bubbling is preferably 15°C to 85°C, and more preferably 25°C to 75°C. A bubbling time is preferably from 90 minutes to 240 minutes, and more preferably from 120 minutes to 180 minutes.

As described above, the fine particle dispersion liquid is prepared.

<Preparation of Composite Powder>

In the present production method, subsequently, the solvent of the fine particle dispersion liquid is removed to obtain the composite powder of the fine particles and the sulfide solid electrolyte raw material (step S2).

(Removal of Solvent)

In order to remove the solvent of the fine particle dispersion liquid, for example, a method for performing pressure reduction, heating, and drying is used by reducing a pressure to 2 kPa, gradually increasing a temperature to 160°C, and maintaining the temperature at 160°C using a vacuum drying apparatus equipped with a vibration mechanism.

When the fine particle dispersion liquid obtained by sulfurizing by bubbling hydrogen sulfide is dried, a method for heating and drying while introducing a dry hydrogen sulfide gas such that the sulfurized sulfide solid electrolyte raw material is not decomposed again by generated water can be used.

(Composite Powder)

By removing the solvent of the fine particle dispersion liquid, the composite powder of the fine particles and the sulfide solid electrolyte raw material (hereinafter, also simply referred to as the composite powder) is obtained. Here, the composite powder does not mean a mixture obtained by only mixing the fine particles and the sulfide solid electrolyte raw material, but means a powder in which the fine particles are dispersed in the sulfide solid electrolyte raw material. For example, when silicon oxide fine particles are used as the fine particles and lithium bromide is used as the sulfide solid electrolyte raw material, a composite powder in which the silicon oxide fine particles are dispersed in lithium bromide is obtained.

"The state in which the fine particles are dispersed in the sulfide solid electrolyte raw material" includes a state in which the fine particles are incorporated into a skeleton structure and are homogeneously solid-solved, a state in which the fine particles are not incorporated into a skeleton structure of the sulfide solid electrolyte and are dispersed as fine particles or components derived from the fine particles, and the like.

(Sulfuration of Composite Powder)

In the case where the reaction with the hydrogen sulfide gas is not performed in step S1, or where the reaction is performed but is insufficient, or where the reaction is insufficient due to a reverse reaction caused by drying without introducing the dry hydrogen sulfide gas in the removal step of the solvent, the composite powder may be sulfurized before proceeding to step S3 of obtaining the sulfide solid electrolyte composite. Accordingly, a sufficiently sulfurized composite powder can be obtained from an unsulfurized or insufficiently sulfurized composite powder.

A method for sulfurizing the composite powder is not particularly limited, and examples thereof include a method for introducing hydrogen sulfide into the composite powder. That is, according to this method, in step S3 to be described later, the sulfide solid electrolyte composite is obtained using the composite powder which has been reacted with hydrogen sulfide.

In the method for introducing hydrogen sulfide into the composite powder, there is a method for introducing hydrogen sulfide as a gas into the composite powder.

As a condition for introducing hydrogen sulfide as the gas into the composite powder, a method for introducing the hydrogen sulfide gas while stirring the powder is preferable in order to efficiently react the powder with hydrogen sulfide. A temperature is preferably 160°C to 220°C for the efficient reaction.

A step of pulverizing the composite powder in advance may be performed before the sulfurization of the composite powder. By performing the pulverizing step, it is possible to prevent the remaining of an unreacted portion in the sulfurization reaction. As a pulverization method, any known method in the related art can be used.

The step of pulverizing the composite powder in advance does not need to be performed before the sulfurization of the composite powder. In this case, the sulfurization reaction can be carried out continuously after the solvent removal in the same apparatus.

(Variation in Composite Powder)

In order to obtain a sulfide solid electrolyte composite having high homogeneity in which a deviation of the fine particles is small in the sulfide solid electrolyte, it is preferable that the fine particles in the composite powder also have high homogeneity.

The homogeneity of the fine particles in the composite powder can be evaluated by a variation of the fine particles in the composite powder. The variation is preferably 25% or less, more preferably 20% or less, and still more preferably 15% or less. A lower limit of the variation is not particularly limited, but is usually 3% or more.

The variation of the fine particles in the composite powder refers to a variation determined by the following method. That is, first, five samples of 0.1 g are taken from the composite powder and heated, decomposed, and dissolved in nitric acid, sulfuric acid, and hydrofluoric acid (nitric acid + sulfuric acid + hydrofluoric acid), and each obtained substance is subjected to ICP (inductively coupled plasma) emission spectrometry to quantify a metal element of the fine particles in the composite powder. When there is a residue in the dissolved liquid, measurement is performed in a state in which the residue does not remain in the dissolved liquid by adjusting an amount of the acid, a proportion, a dissolution time, and a temperature. The residue may be dissolved separately using caustic soda or the like, and the amounts of metal elements may be quantified and added to determine a total amount.

Contents (% by mass) of the metal elements in the fine particles in the composite powders in the five samples determined under the above conditions are defined as A1 to A5. An arithmetic mean value Aave1 of A1 to A5 represented by the following formula is obtained.

$$[\text{Math. 1}]$$

$$\text{Aave1} = (\text{A1} + \text{A2} + \text{A3} + \text{A4} + \text{A5}) \, / \, 5$$

The variation (%) is obtained by the following formula using A1 to A5 and Aave1 obtained by the above formula.

$$[\text{Math. 2}]$$

$$\text{Variation (\%)} = \frac{\{\sqrt{(\text{A1}-\text{Aave1})^2} + \sqrt{(\text{A2}-\text{Aave1})^2} + \sqrt{(\text{A3}-\text{Aave1})^2} + \sqrt{(\text{A4}-\text{Aave1})^2} + \sqrt{(\text{A5}-\text{Aave1})^2}\} \, / \, 5}{\text{Aave1}} \times 100$$

The above variation can be reduced by increasing dispersibility in the step of preparing the fine particle dispersion liquid by using dispersed fine particles having a small particle size, by pulverizing the fine particles to reduce the particle size thereof, by using a dispersant, or the like.

As described above, the present invention also provides the method for producing a composite powder. That is, the method for producing a composite powder is also provided, which includes adding the fine particles having a BET specific surface area of 5 m$^2$/g or more to the solution containing at least one sulfide solid electrolyte raw material and dispersing the fine particles to obtain the fine particle dispersion liquid, and removing the solvent of the fine particle dispersion liquid to obtain the composite powder of the fine particles and the sulfide solid electrolyte raw material.

<Production of Sulfide Solid Electrolyte Composite>

In the present production method, subsequently, the sulfide solid electrolyte composite is obtained using the composite powder (step S3). As described above, the sulfide solid electrolyte composite is a composite of the sulfide solid electrolyte and the fine particles, and the fine particles are present in the dispersed state in the sulfide solid electrolyte. In other words, the fine particles are present with high homogeneity in the sulfide solid electrolyte.

When the solution to which the fine particles are added does not contain all the sulfide solid electrolyte raw materials constituting the sulfide solid electrolyte composite finally obtained by the present production method in step S1 described above, in step S3, the sulfide solid electrolyte composite may be produced using the sulfide solid electrolyte raw material not contained in the solution in addition to the composite powder. As the sulfide solid electrolyte raw material used in this case, the same material as the sulfide solid electrolyte raw material described in the section of step S1 can be used, and among these, a substance containing a phosphorus element (P) such as phosphorus sulfide, a lithium compound such as lithium sulfide, a lithium halide such as lithium chloride, and the like are preferable from the viewpoint of easily adjusting components of the sulfide solid electrolyte and easily forming a high-quality sulfide solid electrolyte.

Examples of the method for obtaining the sulfide solid electrolyte composite using the composite powder include the method using the solid phase method as shown in FIG. 2 and the method using the melting method as shown in FIG. 3.

Hereinafter, the method using the solid phase method and the method using the melting method will be described separately.

(Solid Phase Method)

In the solid phase method, first, the sulfide solid electrolyte raw material is added to the composite powder as necessary and mixed.

The mixing can be performed by a known method in the related art, but mixing performed by mechanical milling is preferred. In the case of using the mechanical milling method using a ball mill, examples thereof include a rotary ball mill that provides rotation movement to a container, a vibrating ball mill that provides vibrational movement, a planetary ball mill that provides revolution and rotation movement, a bead mill, and Attritor (registered trademark). Among them, a planetary ball mill or a bead mill having a higher mixing force or pulverizing force is preferable.

The ball mill may be dry mixing or wet mixing using a dispersion medium, and dry mixing is preferable from the viewpoint of efficiently transmitting energy.

The raw materials are mixed by the mixing to form a raw material mixture. The raw material mixture is a precursor of the sulfide solid electrolyte. The precursor may be a homogeneous amorphous intermediate compound that has been amorphized by employing mixing conditions that are severer than mixing conditions in the related art. The amorphous intermediate compound means that an XRD peak derived from the raw material is not observed.

If desired, the method may further include a pulverizing step or a heat-treating step.

In the pulverizing step, either wet pulverization or dry pulverization may be used.

In the pulverizing step, an average particle diameter of the sulfide solid electrolyte composite is preferably 1 $\mu$m to 100 $\mu$m. Here, the average particle diameter refers to a median diameter (D50) determined from a volume-based particle size distribution chart obtained by measuring a particle size distribution using a particle size distribution meter using a laser diffraction method, which means a particle diameter at which 50 vol% of particles has a particle diameter equal to or less than the value.

The heat-treating step aims to enhance homogeneity and stabilize a quality of the sulfide solid electrolyte composite.

When the obtained sulfide solid electrolyte composite is heat-treated, a heating temperature varies depending on the composition of the sulfide solid electrolyte composite, and is, for example, preferably 200°C to 600°C, more preferably 350°C to 500°C, still more preferably 380°C to 460°C, and particularly preferably 400°C to 450°C. Here, from the viewpoint of the homogenization of the sulfide solid electrolyte and the stabilization of the quality, the heating temperature is preferably 200°C or higher, more preferably 350°C or higher, still more preferably 380°C or higher, and particularly preferably 400°C or higher. From the viewpoint of preventing sintering of the particles, the temperature is preferably 600°C or lower, more preferably 500°C or lower, still more preferably 460°C or lower, and particularly preferably 450°C or lower.

When the sulfide solid electrolyte composite is heat-treated, the heating time varies depending on the composition of the sulfide solid electrolyte composite, and is, for example, preferably 10 minutes to 10 hours, more preferably 30 minutes to 9.5 hours, still more preferably 45 minutes to 9 hours, and particularly preferably 1 hour to 9 hours. Here, from the viewpoint of the homogenization of the sulfide solid electrolyte composite and the stabilization of the quality, a time for the heat treatment is preferably 10 minutes or more, more preferably 30 minutes or more, still more preferably 45 minutes or more, and particularly preferably 1 hour or more. Further, from the viewpoint of the production cost, the time for the heat treatment is preferably 10 hours or less, more preferably 9.5 hours or less, and still more preferably 9 hours or less.

When the sulfide solid electrolyte composite is heat-treated, an atmosphere other than a $SO_2$ concentration during the heat treatment is preferably an inert atmosphere. Examples of the inert atmosphere include a nitrogen gas atmosphere, an argon gas atmosphere, and a helium gas atmosphere.

A dew point during the heat treatment is preferably -20°C or lower, and a lower limit thereof is not particularly limited, and is generally about -80°C. An oxygen concentration is preferably 1000 ppm by volume or less.

(Melting Method)

In the melting method, first, the sulfide solid electrolyte raw material is added to the above composite powder as necessary, and mixed to obtain the raw material mixture. The mixing is performed by, for example, mixing in a mortar, mixing using a medium such as a planetary ball mill, and medium-less mixing such as a pin mill, a powder stirrer, and air flow mixing.

Subsequently, the raw material mixture obtained above is heated to obtain a melt.

A specific method of heating and melting the raw material mixture is not particularly limited. For example, the raw material mixture is placed in a heat-resistant container and heated in a heating furnace. The raw material mixture may be sealed in the heat-resistant container. The melting may be performed in an atmosphere containing a sulfur element or the like. Examples of the sulfur element-containing atmosphere include a mixed gas atmosphere of an inert gas and a sulfur element-containing gas such as a sulfur gas, a hydrogen sulfide gas, or a sulfur dioxide gas.

As the heat-resistant container, a heat-resistant container made of carbon, a heat-resistant container containing an oxide such as quartz, a quartz glass, a borosilicate glass, an aluminosilicate glass, alumina, zirconia, and mullite, a heat-resistant container containing a nitride such as silicon nitride and boron nitride, and a heat-resistant container containing a carbide such as silicon carbide may be used. These heat-resistant containers may have a bulk formed of the above-described material, or may be a container having a layer of carbon, an oxide, a nitride, a carbide, or the like, such as a carbon-coated quartz tube.

A heating temperature when the raw material mixture is heated and melted varies depending on the raw materials to be used and the composition of the raw material mixture, but is, for example, preferably 550°C to 1000°C, more preferably 600°C to 950°C, still more preferably 630°C to 900°C, and particularly preferably 650°C to 800°C. Here, the heating temperature is preferably 550°C or higher, more preferably 600°C or higher, still more preferably 630°C or higher, and particularly preferably 650°C or higher, from the viewpoint of increasing a melting property of the raw material and homogenizing the melt in a short time. The heating temperature is preferably 1000°C or lower, more preferably 950°C or lower, still more preferably 900°C or lower, and particularly preferably 800°C or lower, from the viewpoints of preventing deterioration of components caused by heating, preventing a composition deviation caused by volatilization of components, and further preventing decomposition.

A time for the heating and melting varies depending on a scale, but is preferably 10 minutes to 10 hours, more preferably 30 minutes to 9.5 hours, still more preferably 45 minutes to 9 hours, and particularly preferably 1 hour to 9 hours. Here, the time for the heating and melting is preferably 10 minutes or more, more preferably 30 minutes or more, still more preferably 45 minutes or more, and particularly preferably 1 hour or more, from the viewpoint of allowing the reaction to proceed smoothly. From the viewpoint of productivity, the time for the heating and melting is preferably 10 hours or less, more preferably 9.5 hours or less, and still more preferably 9 hours or less.

A pressure during the heating and melting is not particularly limited, but for example, a normal pressure or a slight pressure is preferred, and normal pressure is more preferred.

A dew point during the heating and melting is preferably -20°C or lower, and a lower limit thereof is not particularly limited, but is usually about -80°C. An oxygen concentration is preferably 1000 ppm by volume or less.

Whether the melt is completely dissolved can be checked by the absence of a peak derived from a crystal in high-temperature X-ray diffraction measurement.

Subsequently, the obtained melt is cooled to precipitate a crystal. The crystal obtained by the precipitation is the sulfide solid electrolyte composite.

The cooling may be performed by a known method, and the method is not particularly limited. Examples of a more specific cooling method include a method in which the melt is poured onto a plate-like body made of carbon or the like and then cooled, a method in which the melt is poured into a narrow gap to be formed into a thin shape, such as a twin roll process, and a gas atomizing method.

A cooling rate is preferably 0.1°C/sec to 10000°C/sec, more preferably 0.5°C/sec to 5000°C/sec, and still more preferably 1°C/sec to 1000°C/sec. The cooling rate is preferably 0.1°C/sec or more, more preferably 0.5°C/sec or more, and still more preferably 1°C/sec or more, from the viewpoint of increasing composition homogeneity and preventing a variation in quality. An upper limit value of the cooling rate is not particularly limited, and the upper limit value is $10^7$°C/sec or less in consideration of the cooling rate of a twin roller, which is generally said to have the highest rapid cooling rate, and from the viewpoint of actual production, the cooling rate is more preferably 10000°C/sec or less, still more preferably 5000°C/sec or less, and even more preferably 1000°C/sec.

An atmosphere during the cooling is preferably an inert atmosphere with a low moisture content, similar to that in the heating and melting.

If desired, the method may further include a pulverizing step or a heat-treating step.

In this case, each of the pulverizing step and the heat-treating step is the same as the pulverizing step and the heat-treating step in the solid phase method, and preferred aspects thereof are also the same. When an atomizing method capable of simultaneously cooling and powdering is adopted as a cooling method, the atomizing method also serves as the pulverizing step.

<<Sulfide Solid Electrolyte Composite>>

The sulfide solid electrolyte composite obtained by the present production method is a composite in which the fine particles are dispersed in the sulfide solid electrolyte. In other words, the composite is a composite in which the fine particles are present with high homogeneity in the sulfide solid electrolyte. A crystal structure of the sulfide solid electrolyte (hereinafter, also simply referred to as the sulfide solid electrolyte) in the sulfide solid electrolyte composite is not particularly limited. Examples of the sulfide solid electrolyte include powders of a sulfide solid electrolyte having a crystal structure containing a Li element, a P element, and an S element, which is referred to as LPS, such as $Li_7P_3S_{11}$, a sulfide solid electrolyte having a crystal structure containing a Li element, a Ge element, a P element, and an S element, which is referred to as LGPS, such as $Li_{10}GeP_2S_{12}$, a sulfide solid electrolyte having an argyrodite crystal structure containing a Li element, a P element, an S element, and a Ha element, and a sulfide solid electrolyte made of a Li-P-S-Ha-based crystallized glass.

The sulfide solid electrolyte may include a crystalline phase and an amorphous phase.

Among these, the argyrodite crystal structure is a crystal structure of a group of compounds derived from a mineral represented by a composition formula $Ag_8GeS_6$. The sulfide solid electrolyte is not limited to the above-described crystal structure, and some elements may be substituted with other elements.

When the sulfide solid electrolyte has the argyrodite crystal structure, the sulfide solid electrolyte more preferably contains, as a Ha element, at least one element selected from the group consisting of Cl, Br, and I, and still more preferably contains two or more elements.

The sulfide solid electrolyte further preferably contains at least one of Cl and Br, and still more preferably contains Cl and Br, as the Ha element.

The argyrodite crystal structure preferably has the above-described structure, and the composition formula is preferably represented by $Li_\alpha PS_\beta Ha_\gamma$ and satisfies relationships of $5 \leq \alpha \leq 7$, $4 \leq \beta \leq 6$, and $1.3 \leq \gamma \leq 2$. Such an element ratio more preferably satisfies relationships of $5.1 < \alpha < 6.3$, $4 < \beta < 5.3$, and $1.4 \leq \gamma \leq 1.9$, and still more preferably satisfies relationships of $5.2 < \alpha < 6.2$, $4.1 < \beta < 5.2$, and $1.5 \leq \gamma \leq 1.8$.

That is, $\alpha$ is preferably 5 or more, more preferably more than 5.1, and still more preferably more than 5.2, and is preferably 7 or less, more preferably less than 6.3, and still more preferably less than 6.2. $\beta$ is preferably 4 or more, more preferably more than 4, and still more preferably more than 4.1, and is preferably 6 or less, more preferably less than 5.3, and still more preferably less than 5.2. $\gamma$ is preferably 1.3 or more, more preferably 1.4 or more, and still more preferably 1.5 or more, and is preferably 2 or less, more preferably 1.9 or less, and still more preferably 1.8 or less.

In the argyrodite crystal structure, a part of the S element may be substituted with the Ha element, an O element, Se, Te, $BH_4$, CN, or the like. A part of the P element may be substituted with a Si element, an Al element, a Sn element, an In element, a Cu element, a Sb element, a Ge element, or the like.

As described above, the sulfide solid electrolyte composite is the composite in which the fine particles are dispersed in the sulfide solid electrolyte. That is, in the sulfide solid electrolyte composite, the fine particles are present with high homogeneity in the sulfide solid electrolyte.

The homogeneity in the sulfide solid electrolyte composite can be evaluated based on the variation of the fine particles in the sulfide solid electrolyte composite. The variation is preferably 15% or less, more preferably 12% or less, and still more preferably 10% or less. A lower limit of the variation is not particularly limited, but is usually 3% or more.

The variation of the fine particles in the sulfide solid electrolyte composite refers to a variation determined by the following method. That is, first, 0.1 g of the sulfide solid electrolyte composite is taken from each of five sulfide solid electrolyte composite samples produced using the composite powder in which the fine particles are dispersed, which is produced in the same batch, each sulfide solid electrolyte composite is heated, decomposed, and dissolved in nitric acid, sulfuric acid, and hydrofluoric acid (nitric acid + sulfuric acid + hydrofluoric acid), and an obtained substance is subjected to ICP (inductively coupled plasma) emission spectrometry to quantify a metal element of the fine particles in the sulfide solid electrolyte composite. When there is a residue in the dissolved liquid, measurement is performed in a state in which the residue does not remain in the dissolved liquid by adjusting an amount of the acid, a proportion, a dissolution time, and a temperature. The residue may be dissolved separately using caustic soda or the like, and the amounts of metal elements may be quantified and added to determine a total amount.

Contents (% by mass) of the metal elements in the fine particles in the sulfide solid electrolyte composites in the five samples obtained under the above conditions are defined as A6 to A10. An arithmetic mean value Aave2 of A6 to A10 represented by the following formula is obtained.

[Math. 3]

$$Aave2 = (A6 + A7 + A8 + A9 + A10) / 5$$

The variation (%) is obtained by the following formula using A6 to A10 and Aave2 obtained by the above formula.

[Math. 4]

$$\text{Variation (\%)} = \frac{\left\{ \sqrt{(A6-Aave2)^2} + \sqrt{(A7-Aave2)^2} + \sqrt{(A8-Aave2)^2} + \sqrt{(A9-Aave2)^2} + \sqrt{(A10-Aave2)^2} \right\} / 5}{Aave2} \times 100$$

The above variation can be reduced by increasing dispersibility in the step of preparing the fine particle dispersion liquid by using dispersed fine particles having a small particle size, by pulverizing the fine particles to reduce the particle size thereof, by using a dispersant, or the like.

The present invention is not limited to the above-described embodiments, and various modifications can be adopted within the scope of the present invention. For example, the present invention is not limited to the above-described embodiments, and may be modified and improved as appropriate. In addition, the material, shape, size, number, arrangement place, and the like of each component in the above-described embodiments are optional as long as the present invention can be achieved, and are not limited.

As described above, the present description discloses the following.

[1] A method for producing a sulfide solid electrolyte composite, the method including:

adding fine particles having a BET specific surface area of 5 $m^2/g$ or more to a solution containing at least one sulfide solid electrolyte raw material and dispersing the fine particles to obtain a fine particle dispersion liquid;

removing a solvent of the fine particle dispersion liquid to obtain a composite powder of the fine particles and the sulfide solid electrolyte raw material; and

obtaining the sulfide solid electrolyte composite using the composite powder.

[2] The method for producing a sulfide solid electrolyte composite according to [1], in which the sulfide solid electrolyte composite is obtained by a solid phase method using the composite powder.

[3] The method for producing a sulfide solid electrolyte composite according to [1], in which the sulfide solid electrolyte composite is obtained by a melting method using the composite powder.

[4] The method for producing a sulfide solid electrolyte composite according to any one of [1] to [3], in which the fine particles are an oxide.

[5] The method for producing a sulfide solid electrolyte composite according to [4], in which the oxide is at least one oxide of $SiO_2$, $Al_2O_3$, and $TiO_2$.

[6] The method for producing a sulfide solid electrolyte composite according to any one of [1] to [3], in which the fine particles are a nitride.

[7] The method for producing a sulfide solid electrolyte composite according to [6], in which the nitride is at least one nitride of AlN, $Si_3N_4$, and BN.

[8] The method for producing a sulfide solid electrolyte composite according to any one of [1] to [7], in which the sulfide solid electrolyte raw material is a lithium halide.

[9] The method for producing a sulfide solid electrolyte composite according to [8], in which the lithium halide is lithium bromide.

[10] The method for producing a sulfide solid electrolyte composite according to any one of [1] to [7], in which the sulfide solid electrolyte raw material is lithium hydroxide.

[11] The method for producing a sulfide solid electrolyte composite according to any one of [1] to [10], in which the solvent is removed after adding an alkali metal sulfide to the fine particle dispersion liquid.

[12] The method for producing a sulfide solid electrolyte composite according to [11], in which the alkali metal sulfide is lithium sulfide.

[13] The method for producing a sulfide solid electrolyte composite according to any one of [1] to [10], in which the solvent is removed after introducing hydrogen sulfide into the fine particle dispersion liquid.

[14] The method for producing a sulfide solid electrolyte composite according to any one of [1] to [10], in which the sulfide solid electrolyte composite is obtained using the composite powder which has been reacted with hydrogen sulfide.

[15] A sulfide solid electrolyte composite including fine particles having a BET specific surface area of 5 $m^2/g$ or more, in which a variation of the fine particles in the sulfide solid electrolyte composite is 15% or less.

[16] A method for producing a composite powder, the method including:

adding fine particles having a BET specific surface area of 5 $m^2/g$ or more to a solution containing at least one sulfide solid electrolyte raw material and dispersing the fine particles to obtain a fine particle dispersion liquid; and

removing a solvent of the fine particle dispersion liquid to obtain the composite powder of the fine particles and the sulfide solid electrolyte raw material.

EXAMPLES

Hereinafter, the present invention is described in detail with reference to Examples, but the present invention is not limited thereto. Examples 1 to 8 and 10 to 17 are Inventive Examples, and Examples 9 and 18 are Comparative Examples.

<Preparation of Sulfide Solid Electrolyte Composite>

(Example 1)

First, 117.5 g of lithium bromide as a sulfide solid electrolyte raw material was added to 330.8 g of water to prepare a lithium bromide aqueous solution. Subsequently, 10.1 g of silicon oxide ($SiO_2$) nanoparticles (product name: AEROSIL (registered trademark) OX50, manufactured by Nippon Aerosil Co., Ltd., BET specific surface area: 50 $m^2$/g, primary particle diameter: 40 nm) were added as fine particles to the lithium bromide aqueous solution, and ultrasonic dispersion was performed for 1 minute using an ultrasonic homogenizer. Accordingly, the lithium bromide aqueous solution (fine particle dispersion liquid) in which the silicon oxide nanoparticles were dispersed was obtained.
Subsequently, the lithium bromide aqueous solution in which the silicon oxide nanoparticles were dispersed was heated and dried under reduced pressure at a temperature of 160°C and a pressure of 2 kPa using a vibration drying apparatus (product name: VH type, manufactured by CHUO KAKOHKI CO.,LTD.) to obtain lithium bromide in which the silicon oxide nanoparticles were dispersed. Lithium bromide was then pulverized in an agate mortar to obtain a lithium bromide powder (composite powder) in which the silicon oxide nanoparticles were dispersed.
Subsequently, a lithium sulfide powder (manufactured by Sigma Co., Ltd., purity: 99.98%), a phosphorus pentasulfide powder (manufactured by Sigma Co., Ltd., purity: 99%), a lithium chloride powder (manufactured by Sigma Co., Ltd., purity: 99.99%) as sulfide solid electrolyte raw materials, and a lithium bromide powder in which the silicon oxide nanoparticles were dispersed which was prepared above, were weighed in a dry nitrogen atmosphere to have a theoretical composition ratio of 98 wt% $Li_{5.3}PS_{4.2}Cl_{0.8}Br_{0.8}$ and 2 wt% $SiO_2$. These powders were mixed in a mixer in the same atmosphere, and then further mixed using a planetary ball mill (LP-M2, manufactured by ITO SEISAKUSHO CO., LTD.) to obtain a raw material mixture. The mixing by the planetary ball mill was performed at 400 rpm for 20 hours using a ball having a particle diameter of 10 mm. The obtained raw material mixture was placed in a sealed quartz tube and heated and fired at 450°C for 5 hours, thereby obtaining a sulfide solid electrolyte composite in Example 1.
A total of five sulfide solid electrolyte composite samples in Example 1 were prepared using the lithium bromide powder (composite powder) in which the silicon oxide nanoparticles were dispersed, which was prepared in the same batch as above.

(Example 2)

First, 50.0 g of lithium hydroxide monohydrate as a sulfide solid electrolyte raw material was added to 330.8 g of water to prepare a lithium hydroxide aqueous solution. Subsequently, 1.9 g of silicon oxide ($SiO_2$) nanoparticles (product name: AEROSIL (registered trademark) OX50, manufactured by Nippon Aerosil Co., Ltd., BET specific surface area: 50 $m^2$/g, primary particle diameter: 40 nm) were added as fine particles to the lithium hydroxide aqueous solution, and ultrasonic dispersion was performed for 1 minute using an ultrasonic homogenizer. Accordingly, the lithium hydroxide aqueous solution in which the silicon oxide nanoparticles were dispersed was obtained.
Next, a nozzle was inserted into the lithium hydroxide dispersion liquid in which the silicon oxide nanoparticles were dispersed, and heating was performed while causing hydrogen sulfide to flow at 0.1 SLM. Hydrogen sulfide and lithium hydroxide were reacted with each other while a temperature was raised from 25°C to 90°C, to obtain a lithium sulfide aqueous solution (fine particle dispersion liquid) in which the silicon oxide nanoparticles were dispersed. The temperature was raised while hydrogen sulfide flowed, and moisture was removed. Finally, the temperature was raised to 200°C and lithium sulfide (composite) in which the silicon oxide nanoparticles were dispersed was obtained. By pulverizing lithium sulfide using an agate mortar, a lithium sulfide powder (composite powder) in which the silicon oxide nanoparticles were dispersed was obtained.
Subsequently, a raw material mixture was prepared, heated, and fired in the same manner as in Example 1 to obtain a sulfide solid electrolyte composite in Example 2.
A total of five sulfide solid electrolyte composite samples in Example 2 were also prepared.

(Example 3)

First, 50.0 g of lithium hydroxide monohydrate as a sulfide solid electrolyte raw material was added to 330.8 g of water to prepare a lithium hydroxide aqueous solution. Subsequently, 1.9 g of silicon oxide ($SiO_2$) nanoparticles (product name: AEROSIL (registered trademark) OX50, manufactured by Nippon Aerosil Co., Ltd., BET specific surface area: 50 $m^2$/g, primary particle diameter: 40 nm) were added as fine particles to the lithium hydroxide aqueous solution, and ultrasonic dispersion was performed for 1 minute using an ultrasonic homogenizer. Accordingly, the lithium hydroxide aqueous solution in which the silicon oxide nanoparticles were dispersed was obtained.
Subsequently, the lithium hydroxide aqueous solution in which the silicon oxide nanoparticles were dispersed was heated and dried under reduced pressure at a temperature of 85°C and a pressure of 2 kPa using a vibration drying apparatus (product name: VH type, manufactured by CHUO KAKOHKI CO.,LTD.) to obtain lithium hydroxide in which the silicon oxide nanoparticles were dispersed. Lithium hydroxide was then pulverized in an agate mortar to obtain a lithium hydroxide powder in which the silicon oxide nanoparticles were dispersed.

Subsequently, the lithium hydroxide powder in which the silicon oxide nanoparticles were dispersed was stirred in the vibration drying apparatus (product name: VH type, manufactured by CHUO KAKOHKI CO.,LTD.) at a temperature of 200°C and a pressure of 2 kPa while a hydrogen sulfide gas was introduced to react lithium hydroxide with hydrogen sulfide, thereby obtaining a lithium sulfide powder (composite powder) in which the silicon oxide nanoparticles were dispersed. The obtained lithium sulfide powder in which the silicon oxide nanoparticles were dispersed was pulverized using an agate mortar.

Subsequently, a raw material mixture was prepared, heated, and fired in the same manner as in Example 1 to obtain a sulfide solid electrolyte composite in Example 3.

A total of five sulfide solid electrolyte composite samples in Example 3 were also prepared.

(Example 4)

A sulfide solid electrolyte composite in Example 4 was prepared in the same manner as in Example 1 except that 10.1 g of aluminum oxide ($Al_2O_3$) nanoparticles (product name: AEROSIL (registered trademark) Alu C, manufactured by Nippon Aerosil Co., Ltd., BET specific surface area: 100 $m^2$/g, primary particle diameter: 13 nm) were used instead of 10.1 g of the silicon oxide nanoparticles as the fine particles in Example 1.

A total of five sulfide solid electrolyte composite samples in Example 4 were also prepared.

(Example 5)

A sulfide solid electrolyte composite in Example 5 was prepared in the same manner as in Example 1 except that 10.1 g of titanium oxide ($TiO_2$) nanoparticles (product name: AEROSIL (registered trademark) $TiO_2$P25, manufactured by Nippon Aerosil Co., Ltd., BET specific surface area: 50 $m^2$/g, primary particle diameter: 21 nm) were used instead of 10.1 g of the silicon oxide nanoparticles as the fine particles in Example 1.

A total of five sulfide solid electrolyte composite samples in Example 5 were also prepared.

(Example 6)

A sulfide solid electrolyte composite in Example 6 was prepared in the same manner as in Example 1 except that 10.1 g of aluminum nitride (AlN) particles (product name: NP-ALN-3, manufactured by EM Japan Co., Ltd., BET specific surface area: 5 $m^2$/g, average particle diameter: 0.5 $\mu$m) were used instead of 10.1 g of the silicon oxide nanoparticles as the fine particles in Example 1.

A total of five sulfide solid electrolyte composite samples in Example 6 were also prepared.

(Example 7)

A sulfide solid electrolyte composite in Example 7 was prepared in the same manner as in Example 1 except that 10.1 g of silicon nitride ($Si_3N_4$) particles (product name: $\alpha$-Si3N4, manufactured by Tomoe Engineering Co., Ltd., BET specific surface area: 13 $m^2$/g, average particle diameter: 0.8 $\mu$m) were used instead of 10.1 g of the silicon oxide nanoparticles as the fine particles in Example 7.

A total of five sulfide solid electrolyte composite samples in Example 7 were also prepared.

(Example 8)

A sulfide solid electrolyte composite in Example 8 was prepared in the same manner as in Example 1 except that 10.1 g of boron nitride (BN) particles (product name: NP-BN-3, manufactured by EM Japan Co., Ltd., BET specific surface area: 6 $m^2$/g, average particle diameter: 0.5 $\mu$m) were used instead of 10.1 g of the silicon oxide nanoparticles as the fine particles in Example 8.

A total of five sulfide solid electrolyte composite samples in Example 8 were also prepared.

(Example 9)

First, 117.5 g of lithium bromide (manufactured by Sigma Co., Ltd.) and 10.1 g of silicon oxide ($SiO_2$) nanoparticles (product name: AEROSIL (registered trademark) OX50, manufactured by Nippon Aerosil Co., Ltd., BET specific surface area: 50 $m^2$/g, primary particle diameter: 40 nm) as fine particles were weighed, placed in a 1000 mL airtight container, and mixed by shaking well for 30 minutes to obtain a mixed powder. Subsequently, a raw material mixture was prepared, heated, and fired in the same manner as in Example 1 to obtain a sulfide solid electrolyte composite in Example 9.

A total of five sulfide solid electrolyte composite samples in Example 9 were also prepared.

(Examples 10 to 17)

A sulfide solid electrolyte composite in each of Examples 10 to 17 was prepared in the same manner as in Examples 1 to 9 except that the sulfide solid electrolyte composite was prepared by a melting method instead of a solid phase method in Examples 1 to 9.

That is, as the melting method, first, a lithium sulfide powder (manufactured by Sigma Co., Ltd., purity: 99.98%), a phosphorus pentasulfide powder (manufactured by Sigma Co., Ltd., purity: 99%), and a lithium chloride powder (manufactured by Sigma Co., Ltd., purity: 99.99%) as sulfide solid electrolyte raw materials, and a lithium bromide powder in which the silicon oxide nanoparticles were dispersed which was prepared above, were weighed in a dry nitrogen atmosphere to have a theoretical composition ratio of 98 wt% $Li_{5.3}PS_{4.2}Cl_{0.8}Br_{0.8}$ and 2 wt% $SiO_2$, and mixed in the same atmosphere by a mixer (mixing apparatus) to obtain a raw material mixture.

Next, the obtained raw material mixture was placed in a heat-resistant container and heated and melted under conditions of a pressure of 1 atmosphere and a temperature of 750°C for 0.5 hours. At this time, a sulfur gas obtained by heating elemental sulfur at a temperature of 350°C was supplied so that a partial pressure of the sulfur gas became 0.1 atm while accompanying $N_2$ as a carrier gas to obtain a gas atmosphere containing the sulfur element, and sulfur was introduced into a melt by performing heating and melting under the gas atmosphere. A content of the sulfur gas in the gas atmosphere containing the sulfur element was 0.1 vol%.

Thereafter, cooling was performed at a cooling rate of 1°C/sec to 1,000°C/sec to obtain a solid as a sulfide solid electrolyte containing an amorphous phase and an argyrodite crystalline phase. Next, the solid was crystallized at 450°C for 1 hour in the nitrogen gas atmosphere to obtain a sulfide solid electrolyte composite containing a sulfide solid electrolyte containing argyrodite crystals.

A total of five sulfide solid electrolyte composite samples in each of Examples 10 to 17 were also prepared.

(Example 18)

First, 117.5 g of lithium sulfide (manufactured by Sigma Co., Ltd.) and 10.1 g of silicon oxide ($SiO_2$) nanoparticles (product name: AEROSIL (registered trademark) OX50, manufactured by Nippon Aerosil Co., Ltd., BET specific surface area: 50 $m^2$/g, primary particle diameter: 40 nm) as fine particles were weighed, placed in a 1000 mL airtight container, and mixed by shaking well for 30 minutes to obtain a mixed powder. Subsequently, a sulfide solid electrolyte composite in Example 18 was prepared by the same melting method as in Examples 10 to 17.

A total of five sulfide solid electrolyte composite samples in Example 18 were also prepared.

<Evaluation of Homogeneity>

(Variation of Fine Particles in Composite Powder)

The variation of the fine particles in the composite powder was determined by the following method.

First, five samples of 0.1 g were taken from the composite powder obtained in each example and heated, decomposed, and dissolved in nitric acid, sulfuric acid, and hydrofluoric acid (nitric acid + sulfuric acid + hydrofluoric acid), and each obtained substance was subjected to an ICP (inductively coupled plasma) emission spectrometer (Agilent 5800, manufactured by Agilent Technologies) to quantify a metal element in the fine particles in the sulfide solid electrolyte composite. That is, when the fine particles were $SiO_2$ or $Si_3N_4$, an amount of Si was quantified; when the fine particles were AlN, an amount of Al was quantified; when the fine particles were $TiO_2$, an amount of Ti was quantified; and when the fine particles were BN, an amount of B was quantified. When the fine particles were $Al_2O_3$ or AlN, residues remained in dissolved liquids, and thus the residues were dissolved separately using caustic soda, and metal elements were quantified and added together to determine a total amount.

Contents (% by mass) of the metal elements of the fine particles in the composite powders in the five samples determined under the above conditions were defined as A1 to A5. The arithmetic mean value Aave1 of A1 to A5 represented by the following formula was obtained.

[Math. 5]

$$Aave1 = (A1 + A2 + A3 + A4 + A5) / 5$$

A variation (%) of the fine particles in the composite powder is obtained by the following formula using A1 to A5 and Aave1 obtained by the above formula.

[Math. 6]

$$Variation\ (\%) = \frac{\{\sqrt{(A1-Aave1)^2}+\sqrt{(A2-Aave1)^2}+\sqrt{(A3-Aave1)^2}+\sqrt{(A4-Aave1)^2}+\sqrt{(A5-Aave1)^2}\}\ /5}{Aave1} \times 100$$

Results are shown in Tables 1 and 2.

(Variation of Fine Particles in Sulfide Solid Electrolyte Composite)

The variation of the fine particles in the sulfide solid electrolyte composite was determined by the following method.

First, 0.1 g of sulfide solid electrolyte composite was taken from each of the five sulfide solid electrolyte composite samples obtained in each example and heated, decomposed, and dissolved in nitric acid, sulfuric acid, and hydrofluoric acid (nitric acid + sulfuric acid + hydrofluoric acid), and an obtained substance was subjected to an ICP (inductively coupled plasma) emission spectrometer (Agilent 5800, manufactured by Agilent Technologies) to quantify a metal element in the fine particles in the sulfide solid electrolyte composite. That is, when the fine particles were $SiO_2$ or $Si_3N_4$, an amount of Si was quantified; when the fine particles were AIN, an amount of Al was quantified; when the fine particles were $TiO_2$, an amount of Ti was quantified; and when the fine particles were BN, an amount of B was quantified. When the fine particles were $Al_2O_3$ or AIN, residues remained in dissolved liquids, and thus the residues were dissolved separately using caustic soda, and metal elements were quantified and added together to determine a total amount.

Contents (% by mass) of the metal elements in the fine particles in the sulfide solid electrolyte composites in the five samples obtained under the above conditions were defined as A6 to A10. The arithmetic mean value Aave2 of A6 to A10 represented by the following formula was obtained.

[Math. 7]

$$Aave2 = (A6 + A7 + A8 + A9 + A10) / 5$$

A variation (%) of the fine particles in the sulfide solid electrolyte composite was obtained by the following formula using A6 to A10 and Aave2 obtained by the above formula.

[Math. 8]

$$Variation\ (\%) = \frac{\{\sqrt{(A6-Aave2)^2}+\sqrt{(A7-Aave2)^2}+\sqrt{(A8-Aave2)^2}+\sqrt{(A9-Aave2)^2}+\sqrt{(A10-Aave2)^2}\}\ /5}{Aave2} \times 100$$

The variation in the sulfide solid electrolyte composite was evaluated according to the following criteria.

A: variation is 15% or less
B: variation is more than 15%

Results are shown in Tables 1 and 2.

(Handling)

In the production of the sulfide solid electrolyte composite, handling was evaluated according to the following criteria.

A: not corresponding to any of the following items.
B: corresponding to at least one of the following items.

<Items>

· When materials are weighed and put into a container of a mixing apparatus, fine particles are scattered by an air flow, and dust is formed
· Static electricity causes fine particles to adhere to a wall and the like of a container of a mixing apparatus
· When mixing in a mixing apparatus, fine particles float to top

Results are shown in Tables 1 and 2.

[Table 1]

| | Fine particles | | Sulfide solid electrolyte raw material in aqueous solution | Sulfurize in aqueous solution | Fine particle dispersion liquid | Sulfurize after solvent removal |
|---|---|---|---|---|---|---|
| | Type | BET specific surface area ($m^2/g$) | | | | |
| Example 1 | Silicon oxide ($SiO_2$) nano-particles | 50 | Lithium bromide | No | Lithium bromide aqueous solution in which silicon oxide nanoparticles are dispersed | No |
| Example 2 | Silicon oxide ($SiO_2$) nano-particles | 50 | Lithium hydroxide monohydrate | Bubble hydrogen sulfide | Lithium sulfide aqueous solution in which silicon oxide nanoparticles are dispersed | Introduce hydrogen sulfide |
| Example 3 | Silicon oxide ($SiO_2$) nano-particles | 50 | Lithium hydroxide monohydrate | No | Lithium hydroxide aqueous solution in which silicon oxide nanoparticles are dispersed | Introduce hydrogen sulfide |
| Example 4 | Aluminum oxide ($Al_2O_3$) nanoparticles | 100 | Lithium bromide | No | Lithium bromide aqueous solution in which aluminum oxide nanoparticles are dispersed | No |
| Example 5 | Titanium oxide ($TiO_2$) nano-particles | 50 | Lithium bromide | No | Lithium bromide aqueous solution in which titanium oxide nanoparticles are dispersed | No |
| Example 6 | Aluminum nitride (AlN) particles | 5 | Lithium bromide | No | Lithium bromide aqueous solution in which aluminum nitride particles are dispersed | No |
| Example 7 | Silicon nitride ($Si_3N_4$) particles | 13 | Lithium bromide | No | Lithium bromide aqueous solution in which silicon nitride particles are dispersed | No |
| Example 8 | Boron nitride (BN) particles | 6 | Lithium bromide | No | Lithium bromide aqueous solution in which boron nitride particles are dispersed | No |
| Example 9 | Silicon oxide ($SiO_2$) nano-particles | 50 | No | No | - | No |

(Table 1 continued)

| | | Composite powder | Solid phase method/melting method | Variation in fine particles in composite powder | Variation in fine particles in sulfide solid electrolyte composite | | Handling |
| | | | | | Variation | Evaluation | |
|---|---|---|---|---|---|---|---|
| Example 1 | | Lithium bromide powder in which silicon oxide nanoparticles are dispersed | Solid phase method | 7% | 5% | A | A |
| Example 2 | | Lithium sulfide powder in which silicon oxide nanoparticles are dispersed | Solid phase method | 7% | 5% | A | A |
| Example 3 | | Lithium sulfide powder in which silicon oxide nanoparticles are dispersed | Solid phase method | 8% | 6% | A | A |
| Example 4 | | Lithium bromide powder in which aluminum oxide nanoparticles are dispersed | Solid phase method | 7% | 4% | A | A |
| Example 5 | | Lithium bromide powder in which titanium oxide nanoparticles are dispersed | Solid phase method | 8% | 5% | A | A |
| Example 6 | | Lithium bromide powder in which aluminum nitride particles are dispersed | Solid phase method | 12% | 6% | A | A |
| Example 7 | | Lithium bromide powder in which silicon nitride particles are dispersed | Solid phase method | 8% | 5% | A | A |
| Example 8 | | Lithium bromide powder in which boron nitride particles are dispersed | Solid phase method | 12% | 7% | A | A |
| Example 9 | | Mixture of tin sulfide and lithium sulfide powder | Solid phase method | 35% | 45% | B | B |

[Table 2]

| | | Fine particles | | Sulfide solid electrolyte raw material in aqueous solution | Sulfurize in aqueous solution | Fine particle dispersion liquid | Sulfurize after solvent removal |
| | | Type | BET specific surface area $(m^2/g)$ | | | | |
|---|---|---|---|---|---|---|---|
| Example 10 | | Silicon oxide $(SiO_2)$ nanoparticles | 50 | Lithium bromide | No | Lithium bromide aqueous solution in which silicon oxide nanoparticles are dispersed | No |
| Example 11 | | Silicon oxide $(SiO_2)$ nanoparticles | 50 | Lithium hydroxide monohydrate | Bubble hydrogen sulfide | Lithium sulfide aqueous solution in which silicon oxide nanoparticles are dispersed | Introduce hydrogen sulfide |
| Example 12 | | Silicon oxide $(SiO_2)$ nanoparticles | 50 | Lithium hydroxide monohydrate | No | Lithium hydroxide aqueous solution in which silicon oxide nanoparticles are dispersed | Introduce hydrogen sulfide |

(continued)

| | | Fine particles | | Sulfide solid electrolyte raw material in aqueous solution | Sulfurize in aqueous solution | Fine particle dispersion liquid | Sulfurize after solvent removal |
|---|---|---|---|---|---|---|---|
| | | Type | BET specific surface area $(m^2/g)$ | | | | |
| | Example 13 | Aluminum oxide $(Al_2O_3)$ nanoparticles | 100 | Lithium bromide | No | Lithium bromide aqueous solution in which aluminum oxide nanoparticles are dispersed | No |
| | Example 14 | Titanium oxide $(TiO_2)$ nanoparticles | 50 | Lithium bromide | No | Lithium bromide aqueous solution in which titanium oxide nanoparticles are dispersed | No |
| | Example 15 | Aluminum nitride (AlN) particles | 5 | Lithium bromide | No | Lithium bromide aqueous solution in which aluminum nitride particles are dispersed | No |
| | Example 16 | Silicon nitride $(Si_3N_4)$ particles | 13 | Lithium bromide | No | Lithium bromide aqueous solution in which silicon nitride particles are dispersed | No |
| | Example 17 | Boron nitride (BN) particles | 6 | Lithium bromide | No | Lithium bromide aqueous solution in which boron nitride particles are dispersed | No |
| | Example 18 | Silicon oxide $(SiO_2)$ nanoparticles | 50 | No | No | - | No |

(Table 2 continued)

| | | Composite powder | Solid phase method/melting method | Variation in fine particles in composite powder | Variation in fine particles in sulfide solid electrolyte composite | | Handling |
|---|---|---|---|---|---|---|---|
| | | | | | Variation | Evaluation | |
| | Example 10 | Lithium bromide powder in which silicon oxide nanoparticles are dispersed | Melting method | 7% | 5% | A | A |
| | Example 11 | Lithium sulfide powder in which silicon oxide nanoparticles are dispersed | Melting method | 7% | 4% | A | A |
| | Example 12 | Lithium sulfide powder in which silicon oxide nanoparticles are dispersed | Melting method | 8% | 6% | A | A |
| | Example 13 | Lithium bromide powder in which aluminum oxide nanoparticles are dispersed | Melting method | 7% | 4% | A | A |
| | Example 14 | Lithium bromide powder in which titanium oxide nanoparticles are dispersed | Melting method | 8% | 5% | A | A |

(continued)

|  | Composite powder | Solid phase method/melting method | Variation in fine particles in composite powder | Variation in fine particles in sulfide solid electrolyte composite | | Handling |
|---|---|---|---|---|---|---|
|  |  |  |  | Variation | Evaluation |  |
| Example 15 | Lithium bromide powder in which aluminum nitride particles are dispersed | Melting method | 12% | 5% | A | A |
| Example 16 | Lithium bromide powder in which silicon nitride particles are dispersed | Melting method | 8% | 5% | A | A |
| Example 17 | Lithium bromide powder in which boron nitride particles are dispersed | Melting method | 12% | 6% | A | A |
| Example 18 | Mixture of tin sulfide and lithium sulfide powder | Melting method | 35% | 40% | B | B |

In Examples 1 to 8 and Examples 10 to 17, since the fine particles having a BET specific surface area of 5 m$^2$/g or more were dispersed in the aqueous solution, the variation in the fine particles in the finally obtained sulfide solid electrolyte composite was small, and the homogeneity thereof is excellent. Since the sulfide solid electrolyte composite is produced by dispersing the fine particles in the aqueous solution, the fine particles are not scattered, and handleability during the production is excellent.

On the other hand, in each of Examples 9 and 18, the variation occurred during the mixing to prepare the composite powder, and the variation also occurred during the mixing to produce the sulfide electrolyte composite due to scattering, adhesion to wall surfaces, and the like, so that the variation of the fine particles in the finally obtained sulfide solid electrolyte composite is small, and the homogeneity thereof is poor. Furthermore, the handleability during the production is also poor.

Although various embodiments have been described above with reference to the drawings, it is needless to say that the present invention is not limited to such examples. It is obvious for a person skilled in the art that various modifications and variations can be made within the category described in the scope of claims and it is understood that such modifications and variations naturally belong to the technical scope of the present invention. Further, the components described in the above embodiment may be combined in any manner without departing from the spirit of the invention.

The present application is based on a Japanese Patent Application (No. 2022-212573) filed on December 28, 2022, contents of which are incorporated herein by reference.

**Claims**

1. A method for producing a sulfide solid electrolyte composite, the method comprising:

   adding fine particles having a BET specific surface area of 5 m$^2$/g or more to a solution comprising at least one sulfide solid electrolyte raw material and dispersing the fine particles to obtain a fine particle dispersion liquid;
   removing a solvent of the fine particle dispersion liquid to obtain a composite powder of the fine particles and the sulfide solid electrolyte raw material; and
   obtaining the sulfide solid electrolyte composite using the composite powder.

2. The method for producing a sulfide solid electrolyte composite according to claim 1, wherein the sulfide solid electrolyte composite is obtained by a solid phase method using the composite powder.

3. The method for producing a sulfide solid electrolyte composite according to claim 1, wherein the sulfide solid electrolyte composite is obtained by a melting method using the composite powder.

4. The method for producing a sulfide solid electrolyte composite according to claim 1, wherein the fine particles are an oxide.

5. The method for producing a sulfide solid electrolyte composite according to claim 4, wherein the oxide is at least one oxide of $SiO_2$, $Al_2O_3$, and $TiO_2$.

6. The method for producing a sulfide solid electrolyte composite according to claim 1, wherein the fine particles are a nitride.

7. The method for producing a sulfide solid electrolyte composite according to claim 6, wherein the nitride is at least one nitride of AlN, $Si_3N_4$, and BN.

8. The method for producing a sulfide solid electrolyte composite according to claim 1, wherein the sulfide solid electrolyte raw material is a lithium halide.

9. The method for producing a sulfide solid electrolyte composite according to claim 8, wherein the lithium halide is lithium bromide.

10. The method for producing a sulfide solid electrolyte composite according to claim 1, wherein the sulfide solid electrolyte raw material is lithium hydroxide.

11. The method for producing a sulfide solid electrolyte composite according to claim 1, wherein the solvent is removed after adding an alkali metal sulfide to the fine particle dispersion liquid.

12. The method for producing a sulfide solid electrolyte composite according to claim 11, wherein the alkali metal sulfide is lithium sulfide.

13. The method for producing a sulfide solid electrolyte composite according to claim 1, wherein the solvent is removed after introducing hydrogen sulfide into the fine particle dispersion liquid.

14. The method for producing a sulfide solid electrolyte composite according to claim 1, wherein the sulfide solid electrolyte composite is obtained using the composite powder which has been reacted with hydrogen sulfide.

15. A sulfide solid electrolyte composite comprising fine particles having a BET specific surface area of 5 $m^2$/g or more, wherein a variation of the fine particles in the sulfide solid electrolyte composite is 15% or less.

16. A method for producing a composite powder, the method comprising:

adding fine particles having a BET specific surface area of 5 $m^2$/g or more to a solution comprising at least one sulfide solid electrolyte raw material and dispersing the fine particles to obtain a fine particle dispersion liquid; and removing a solvent of the fine particle dispersion liquid to obtain the composite powder of the fine particles and the sulfide solid electrolyte raw material.

FIG. 1

```
┌─────────────────────────┐
│          START          │
└─────────────────────────┘
             │
             ▼
┌─────────────────────────────────────────────┐
│ ADD FINE PARTICLES HAVING BET OF 5 m²/g OR   │
│ MORE TO SOLUTION CONTAINING AT LEAST ONE     │──── S1
│ SULFIDE SOLID ELECTROLYTE RAW MATERIAL AND   │
│ DISPERSE FINE PARTICLES TO OBTAIN FINE       │
│ PARTICLE DISPERSION LIQUID                   │
└─────────────────────────────────────────────┘
             │
             ▼
┌─────────────────────────────────────────────┐
│ REMOVE SOLVENT OF FINE PARTICLE DISPERSION   │
│ LIQUID TO OBTAIN COMPOSITE POWDER OF FINE    │──── S2
│ PARTICLES AND SULFIDE SOLID ELECTROLYTE      │
│ RAW MATERIAL                                 │
└─────────────────────────────────────────────┘
             │
             ▼
┌─────────────────────────────────────────────┐
│ OBTAIN SULFIDE SOLID ELECTROLYTE             │──── S3
│ COMPOSITE USING COMPOSITE POWDER             │
└─────────────────────────────────────────────┘
             │
             ▼
┌─────────────────────────┐
│           END           │
└─────────────────────────┘
```

## FIG. 2

```
┌─────────────────┐
│      START      │
└─────────────────┘
         │
         ▼
┌──────────────────────────────────────────────────┐
│ ADD FINE PARTICLES HAVING BET OF 5 m²/g OR MORE TO │
│ SOLUTION CONTAINING AT LEAST ONE SULFIDE SOLID     │──── S1
│ ELECTROLYTE RAW MATERIAL AND DISPERSE FINE         │
│ PARTICLES TO OBTAIN FINE PARTICLE DISPERSION LIQUID │
└──────────────────────────────────────────────────┘
         │
         ▼
┌──────────────────────────────────────────────────┐
│ REMOVE SOLVENT OF FINE PARTICLE DISPERSION LIQUID  │
│ TO OBTAIN COMPOSITE POWDER OF FINE PARTICLES AND   │──── S2
│ SULFIDE SOLID ELECTROLYTE RAW MATERIAL             │
└──────────────────────────────────────────────────┘
         │
         ▼
┌──────────────────────────────────────────────────┐
│ OBTAIN SULFIDE SOLID ELECTROLYTE COMPOSITE BY      │──── S3a
│ SOLID PHASE METHOD USING COMPOSITE POWDER          │
└──────────────────────────────────────────────────┘
         │
         ▼
┌─────────────────┐
│       END       │
└─────────────────┘
```

Boxes S1, S2, S3a description:

**S1:** ADD FINE PARTICLES HAVING BET OF 5 $m^2/g$ OR MORE TO SOLUTION CONTAINING AT LEAST ONE SULFIDE SOLID ELECTROLYTE RAW MATERIAL AND DISPERSE FINE PARTICLES TO OBTAIN FINE PARTICLE DISPERSION LIQUID

**S2:** REMOVE SOLVENT OF FINE PARTICLE DISPERSION LIQUID TO OBTAIN COMPOSITE POWDER OF FINE PARTICLES AND SULFIDE SOLID ELECTROLYTE RAW MATERIAL

**S3a:** OBTAIN SULFIDE SOLID ELECTROLYTE COMPOSITE BY SOLID PHASE METHOD USING COMPOSITE POWDER

## FIG. 3

```
            ┌─────────────────┐
            │      START      │
            └─────────────────┘
                     │
                     ▼
   ┌──────────────────────────────────────────┐
   │ ADD FINE PARTICLES HAVING BET OF 5 m²/g   │
   │ OR MORE TO SOLUTION CONTAINING AT LEAST   │ ～ S1
   │ ONE SULFIDE SOLID ELECTROLYTE RAW         │
   │ MATERIAL AND DISPERSE FINE PARTICLES      │
   │ TO OBTAIN FINE PARTICLE DISPERSION LIQUID │
   └──────────────────────────────────────────┘
                     │
                     ▼
   ┌──────────────────────────────────────────┐
   │ REMOVE SOLVENT OF FINE PARTICLE           │
   │ DISPERSION LIQUID TO OBTAIN COMPOSITE     │ ～ S2
   │ POWDER OF FINE PARTICLES AND SULFIDE      │
   │ SOLID ELECTROLYTE RAW MATERIAL            │
   └──────────────────────────────────────────┘
                     │
                     ▼
   ┌──────────────────────────────────────────┐
   │ OBTAIN SULFIDE SOLID ELECTROLYTE          │
   │ COMPOSITE BY MELTING METHOD USING         │ ～ S3b
   │ COMPOSITE POWDER                          │
   └──────────────────────────────────────────┘
                     │
                     ▼
            ┌─────────────────┐
            │       END       │
            └─────────────────┘
```

## INTERNATIONAL SEARCH REPORT

| | International application No. |
|---|---|
| | **PCT/JP2023/046402** |

**A. CLASSIFICATION OF SUBJECT MATTER**

*H01B 13/00*(2006.01)i; *C01B 25/14*(2006.01)i; *H01M 10/0562*(2010.01)i
FI: H01B13/00 Z; C01B25/14; H01M10/0562

According to International Patent Classification (IPC) or to both national classification and IPC

**B. FIELDS SEARCHED**

Minimum documentation searched (classification system followed by classification symbols)

H01B13/00; C01B25/14; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/259819 A1 (PANASONIC INTELLECTUAL PROPERTY MANAGEMENT CO., LTD.) 15 December 2022 (2022-12-15) paragraphs [0008]-[0245], fig. 1-5 | 15 |
| A | paragraphs [0008]-[0245], fig. 1-5 | 1-14, 16 |
| A | WO 2021/132537 A1 (MITSUI MINING & SMELTING CO., LTD.) 01 July 2021 (2021-07-01) paragraphs [0013]-[0147], fig. 1-4 | 1-14, 16 |
| A | JP 2004-294931 A (SONY CORPORATION) 21 October 2004 (2004-10-21) paragraphs [0026]-[0120] | 1-14, 16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 March 2024** | **19 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

| International application No. |
| --- |
| **PCT/JP2023/046402** |

| Patent document cited in search report | | | Publication date (day/month/year) | Patent family member(s) | Publication date (day/month/year) |
| --- | --- | --- | --- | --- | --- |
| WO | 2022/259819 | A1 | 15 December 2022 | (Family: none) | |
| WO | 2021/132537 | A1 | 01 July 2021 | US 2022/0263122 A1 paragraphs [0021]-[0155], fig. 1-4 EP 4084113 A1 KR 10-2021-0100131 A CN 113348577 A | |
| JP | 2004-294931 | A | 21 October 2004 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020105604 A

- JP 2022212573 A

**Non-patent literature cited in the description**

- **H. YAMANE et al.** Lithium aluminum nitride, Li3AlN2 as a lithium solid electrolyte. *Solid State Ionics*, February 1985, vol. 15 (1), 51-54